# EUROPÄISCHE PATENTANMELDUNG

(11) **EP 2 826 761 A1**
(43) Veröffentlichungstag der Anmeldung: **21.01.2015**
(21) Anmeldenummer: 13176718.8
(22) Anmeldetag: 16.07.2013
(51) Int. Cl.: C04B 24/28, C04B 28/02, C08G 59/50, C08L 63/00

(54) **Epoxidharz-vergütete zementgebundene Zusammensetzung als Beschichtung oder Versiegelung**

(71) Anmelder: Sika Technology AG, 6340 Baar (CH)
(72) Erfinder: Teichert, David, 70806 Kornwestheim (DE); Conrad, Lars, 70437 Stuttgart (DE); Grötzinger, Jochen, 73525 Schwäbisch Gmünd (DE)
(74) Vertreter: Sika Patent Attorneys

(57) **Zusammenfassung**

Beschrieben wird eine mehrkomponentige Zusammensetzung, umfassend A) eine Binderkomponente (A) umfassend mindestens ein Epoxidharz, B) eine wässrige Härterkomponente (B) umfassend mindestens eine Aminverbindung als Aminhärter und Wasser und C) eine feste Komponente (C) umfassend mindestens ein hydraulisches anorganisches Bindemittel, vorzugsweise Zement, wobei die mehrkomponentige Zusammensetzung, bezogen auf das Gesamtgewicht, mindestens 8 Gew.-% organisches Bindemittel enthält, wobei die Gesamtmenge an Epoxidharz und Aminhärter das organische Bindemittel darstellt. Die mehrkomponentige Zusammensetzung enthält bevorzugt mindestens ein Pigment als Farbmittel.

Die mehrkomponentige Zusammensetzung eignet sich hervorragend zur Herstellung von Bodenbeschichtungen oder -versiegelungen, die in einer großen Vielfalt von Farbtönen hergestellt werden können.

## Beschreibung

### Technisches Gebiet

Die Erfindung betrifft eine mehrkomponentige Zusammensetzung, ein Verfahren zur Herstellung einer Beschichtung mit der mehrkomponentigen Zusammensetzung und die Verwendung der mehrkomponentigen Zusammensetzung als Mörtel, Versiegelung oder Beschichtung.

### Stand der Technik

Für Fußbodenbeschichtungssysteme gibt es ein teilweise vielfältiges Anforderungsprofil. Gewünschte Eigenschaften für Fußbodenbeschichtungen können z.B. ein ästhetisch ansprechendes Aussehen, eine hohe mechanische Beständigkeit oder Beständigkeit gegen Chemikalien sein. Weitere Anforderungen sind z.B. gute Verarbeitbarkeit, geringe Vergilbung, der Einsatz umweltfreundlicher Komponenten und Temperaturbeständigkeit.

In der Praxis werden heutzutage häufig organische oder organisch-anorganische Hybridsysteme für Fußbodenbeschichtungen eingesetzt. Beispiele sind lösemittelfreie Epoxidharz-Reaktionsbeschichtungen, wässrige Epoxidharz-Beschichtungen, Kunststoff-modifizierte zementöse Systeme (PCC) wie Epoxidharz-modifizierte zementöse Systeme (ECC) oder Polyurethan-modifizierte zementöse Systeme.

Die Kombination von verschiedenen, sich teilweise in den Materialanforderungen widersprechenden Eigenschaften in einem Fußbodenbeschichtungssystem ist dabei häufig schwierig. Während gängige Systeme z.B. hinsichtlich einiger Anforderungen gute Eigenschaften aufweisen, sind die Eigenschaften des Systems in anderer Hinsicht häufig nicht zufriedenstellend.

Bei Einsatz lösemittelfreier Epoxidharz-Reaktionsbeschichtungen ist z.B. die Beschichtung einer frisch hergestellten Betonfläche im Allgemeinen erst nach 28 Tagen möglich, da die Restfeuchte des Betons 4% nicht überschreiten darf. Aufgrund der mangelnden Diffusionsfähigkeit der Epoxidharz-Reaktionsbeschichtung ist ein Schutz des Betons vor Wassereintrag nötig, da sonst die Gefahr von Blasenbildung in der Epoxidharz-Reaktionsbeschichtung besteht. Des Weiteren sind Beschichtungen auf Reaktionsharzbasis meist durch UV-Licht hervorgerufenen optischen Veränderungen (Vergilbung) unterworfen.

Auf Wasser basierende Epoxidharz-Beschichtungen weisen eine relativ geringe mechanische und chemische Stabilität auf.

Epoxidharz-modifizierte zementöse Systeme können bisher nicht in gewünschter Farbtonvielfalt gefertigt werden und werden deshalb nicht im dekorativen Bereich als Endschicht eingesetzt. Außerdem weisen diese Produkte eine stumpf matte Optik auf und der Glanzgrad ist nicht variabel einstellbar. Übliche Epoxidharz-modifizierte zementöse Systeme weisen einen relativ geringen organischen Bindemittelgehalt von höchstens 5 Gew.-% auf.

Polyurethan-modifizierte zementöse Systeme weisen im Allgemeinen eine sehr starke Vergilbungsneigung auf und besitzen eine sehr kurze Verarbeitungszeit, welche im praktischen Einsatz zu Problemen bei hohen Temperaturen führt. Außerdem können solche Systeme Bestandteile enthalten, die im Verdacht stehen krebserregend zu sein. Aufgrund der starken Vergilbung werden diese Systeme auch nur in geringer Farbtonvielfalt angeboten.

### Darstellung der Erfindung

Die Aufgabe der Erfindung bestand daher in der Bereitstellung einer Zusammensetzung, mit der Bodenbeschichtungen mit einem ausgewogenen Eigenschaftsprofil hergestellt werden können und die die vorstehend beschriebenen Nachteile der Systeme nach dem Stand der Technik nicht mehr aufweisen. Insbesondere soll eine Bodenbeschichtung mit hoher mechanischer und chemischer Stabilität bereitgestellt werden, die gleichzeitig eine große Farbtonvielfalt und eine ansprechende Optik ermöglicht.

Die Aufgabe konnte überraschenderweise durch eine organisch-anorganische Hybridzusammensetzung mit einem relativ hohen organischen Bindemittelanteil gelöst werden. Die Zusammensetzung weist eine hohe Kompatibilität mit handelsüblichen Farbpastensystemen auf Basis von Pigmenten auf, so dass die Beschichtung nach Bedarf in einer großen Vielfalt von Farbtönen hergestellt werden kann.

Die Erfindung betrifft daher eine mehrkomponentige Zusammensetzung, umfassend
A) eine Binderkomponente (A) umfassend mindestens ein Epoxidharz,
B) eine wässrige Härterkomponente (B) umfassend mindestens eine Aminverbindung als Aminhärter und Wasser und
C) eine feste Komponente (C) umfassend mindestens ein hydraulisches anorganisches Bindemittel, vorzugsweise Zement,
   wobei die mehrkomponentige Zusammensetzung, bezogen auf das Gesamtgewicht, mindestens 8 Gew.-% organisches Bindemittel enthält, wobei die Gesamtmenge an Epoxidharz und Aminhärter das organische Bindemittel darstellt. In einer bevorzugten Ausführungsform umfasst die mehrkomponentige Zusammensetzung mindestens ein Pigment als Farbmittel, um farbige Beschichtungen oder Versiegelung zu erhalten. Dabei besteht der Hauptunterschied zwischen Beschichtung und Versiegelung in der aufgebrachten Menge der erfindungsgemäßen Zusammensetzung. Als Versiegelung wird die erfindungsgemäße Zusammensetzung bezeichnet wenn eine relative geringe Menge Material aufgebracht wird, um Schichtdicken bis ca. 500µm zu erhalten. Noch größere Schichtdicken werden im Allgemeinen als Beschichtungen bezeichnet, wobei der Übergang von Versiegelung zu Beschichtung nicht scharf abgegrenzt ist.

Die mehrkomponentige Zusammensetzung eignet sich hervorragend zur Herstellung von Versiegelungen oder Beschichtungen, insbesondere Bodenbeschichtungen oder -versiegelungen, und ermöglicht es, folgende Eigenschaften miteinander in einem Produkt zu kombinieren:
- sie ist als Beschichtung mit oder ohne Grundierung einsetzbar
- sie kann auf "frischem" bzw. "grünem" Beton eingesetzt werden, d.h. der Untergrund kann eine hohe Restfeuchte aufweisen
- die erhaltenen Beschichtungen sind mechanisch hochfest und abriebfest sowie vergilbungsarm; sie sind ferner chemikalienbeständiger als konventionelle Reaktionsharzsysteme, temperaturbeständig, dampfdiffusionsoffen und flüssigkeitsdicht
- die Zusammensetzung kann arm an oder frei von VOC (flüchtigen organischen Komponenten) formuliert werden, sie ist umweltfreundlich, wasserverdünnbar und für deren Verarbeitung eingesetzte Geräte können mit Wasser gereinigt werden, sie ist durch den relativ hohen anorganischen Anteil nachhaltig
- durch Kompatibilität zu kommerziell erhältlichen Farbpastensystemen ist eine große Vielfalt an Farbtönen möglich
- glatte oder raue Oberflächen (Rutschhemmung) sind einstellbar
- die Zusammensetzung ist kostengünstig, weist hervorragende Verarbeitungseigenschaften auf und ist sowohl kniend als auch stehend zu verarbeiten
- der Glanzgrad der erhaltenen Beschichtung ist von matt bis glänzend beliebig einstellbar
- es erfolgt eine schnellere Aushärtung der Zusammensetzung und damit kürzere Stillstandszeiten als z.B. bei Epoxidharz-basierenden Produkten.

Bevorzugte Ausführungsformen der Zusammensetzung sind in den abhängigen Ansprüchen wiedergegeben. Im Folgenden wird die Erfindung ausführlich erläutert.

### Weg zur Ausführung der Erfindung

Verbindungsnamen, die mit "Poly" beginnen, bezeichnen Substanzen, die pro Molekül formal zwei oder mehr der funktionellen Gruppen enthalten, die in ihren Namen auftreten. Die Verbindung kann monomer, oligomer oder polymer sein. Ein Polyamin ist z.B. eine Verbindung mit zwei oder mehr Aminogruppen. Ein Polyepoxid ist eine Verbindung mit zwei oder mehr Epoxygruppen.

Epoxidharze sind Polyepoxide, d.h. Verbindungen mit zwei oder mehr Epoxidgruppen. Epoxidharze sind bevorzugt oligomere oder polymere Verbindungen. Epoxidharze werden manchmal auch in Verbindung mit sogenannten Reaktivverdünnern eingesetzt. Reaktivverdünner sind Mono- oder Polyepoxide. Die Reaktivverdünner besitzen eine geringere Viskosität als das eingesetzte Epoxidharz und dienen dazu, die Viskosität des eingesetzten Epoxidharzes zu verringern. Der optionale Reaktivverdünner wird ebenfalls in die organische Bindemittelmatrix eingebaut und wird daher hier für die Bestimmung des organischen Bindemittelgehalts den Epoxidharzen zugerechnet.

Das Epoxid-Equivalentgewicht (EEW) kann gemäß DIN 53188 bestimmt werden und wird in g/Eq. angegeben. Das NH-Equivalentgewicht kann gemäß DIN 16945 bestimmt werden und wird in g/Eq. angegeben. Das stöchiometrische Verhältnis von Epoxidfunktionalität zu Aminfunktionalität ist der Quotient von Epoxid-Equivalentgewicht zu NH-Equivalentgewicht und wird häufig in % angegeben. Das NH-Equivalentgewicht bezieht sich dabei auf die aktiven NH-Wasserstoffe. Ein primäres Amin weist z.B. zwei aktive NH-Wasserstoffe auf.

Bei der Zusammensetzung der Erfindung handelt es sich um eine mehrkomponentige Zusammensetzung, d.h. die Zusammensetzung umfasst mehrere, insbesondere drei oder mehr individuelle Komponenten, die erst bei Gebrauch miteinander gemischt werden. Die Komponenten werden vor Gebrauch gesondert gelagert, um spontane Reaktion zu vermeiden. Für den Gebrauch werden die Komponenten miteinander gemischt. Nach der Vermischung beginnen anorganische Hydratations- und organische Vernetzungsreaktionen, die schließlich zur Härtung der Mischung führen.

Die erfindungsgemäße Zusammensetzung umfasst eine Binderkomponente (A), eine Härterkomponente (B) und eine feste Komponente (C). Es kann sich um eine dreikomponentige Zusammensetzung handeln, die nur aus diesen drei Komponenten besteht. Die Zusammensetzung kann aber nach Bedarf auch eine oder mehrere weitere zusätzliche Komponenten umfassen. Wenn z.B. die erfindungsgemäße mehrkomponentige Zusammensetzung in der bevorzugten Ausführungsform Pigmente als Farbmittel enthält, können diese in mindestens einer der drei genannten Komponenten (A), (B) oder (C) und/oder in einer zusätzlichen Pigmentkomponente (D) enthalten sein.

Es ist klar, dass der Anteil eines bestimmten Inhaltsstoffs in der Mischung der Komponenten von dem Anteil dieses Inhaltsstoffs in der betreffenden Komponente und dem Mischungsverhältnis der Komponenten abhängt. Anteile bzw. Verhältnisse von bestimmten Inhaltsstoffen, die hier angegeben werden, beziehen sich, sofern nicht anders angegeben, auf die zweckmäßigen bzw. geeigneten Gewichtsanteile bzw. Gewichtsverhältnisse der Inhaltsstoffe in der Mischung der Komponenten der mehrkomponentigen Zusammensetzung. Diese wird z.B. durch Mischen der Komponenten in geeigneten Mischungsverhältnissen gemäß Gebrauchsanweisung erhalten.

Bei der mehrkomponentigen Zusammensetzung handelt es sich um eine organisch-anorganische Hybridzusammensetzung, in der sowohl das organische Bindemittel als auch das anorganische Bindemittel Bindemittelfunktion aufweisen, d.h. beide Bindemittel können eine Matrix für die Einbettung fester Partikel und die Anbindung an eine Unterlage bilden.

Die Binderkomponente (A) umfasst mindestens ein Epoxidharz und gegebenenfalls einen Reaktivverdünner. Die Binderkomponente (A) ist vorzugsweise eine flüssige Komponente. Sie kann viskos sein, ist aber im Allgemeinen gießfähig.

Die Binderkomponente (A) enthält mindestens ein Epoxidharz. Es kann ein Epoxidharz oder eine Mischung von zwei oder mehr Epoxidharzen eingesetzt werden. Als Epoxidharz können alle in der Epoxychemie üblichen Epoxidharze eingesetzt werden. Epoxidharze können z.B. auf bekannte Art und Weise aus der Oxidation von den entsprechenden Olefinen oder aus der Reaktion von Epichlorhydrin mit den entsprechenden Polyolen oder Polyphenolen hergestellt werden.

Epoxidharze können in Epoxid-Flüssigharze und Epoxid-Festharze unterteilt werden. Das Epoxidharz kann z.B. ein Epoxy-Equivalentgewicht von 156 bis 500 g/Eq. aufweisen. Das Epoxidharz ist vorzugsweise ein Diepoxid.

In einer Ausführungsform kann das Epoxidharz ein aromatisches Epoxidharz sein. Dafür geeignet sind beispielsweise Epoxid-Flüssigharze der Formel (1), 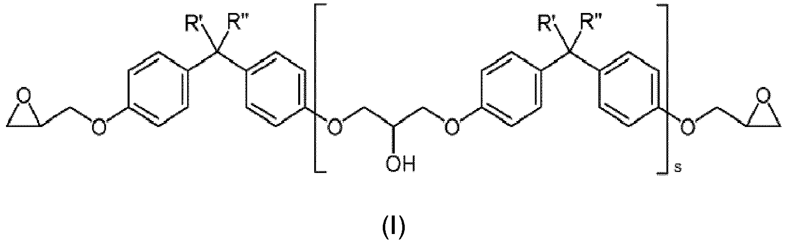 wobei R' und R" unabhängig voneinander jeweils für ein Wasserstoffatom oder für eine Methylgruppe stehen, und s im Mittel für einen Wert von 0 bis kleiner 2 und bevorzugt 0 bis 1 steht. Bevorzugt sind solche Flüssigharze der Formel (1), bei denen der Index s im Mittel für einen Wert von kleiner als 0,2 steht.

Bei den Epoxidharzen der Formel (1) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Solche Epoxid-Flüssigharze sind kommerziell erhältlich, z.B. unter den Bezeichnungen Araldite^{®} von Huntsman, D.E.R.^{®} von Dow, Epikote^{®}von Momentive, Epalloy^{®}von CVC, Chem Res^{®} von Cognis oder Beckopox^{®} von Cytec.

Weitere geeignete aromatische Epoxidharze sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynapht-1-yl)-methan, Bis-(4-hydroxynapht-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylenbis-(1-methyl-ethyliden)]-bisanilin (Bisanilin-M).

In einer weiteren Ausführungsform kann es sich beim Epoxidharz um ein aliphatisches oder cycloaliphatisches Epoxidharz handeln, wie z.B.
- Diglycidylether;
- ein Glycidylether eines gesättigten oder ungesättigten, verzweigten oder unverzweigten, zyklischen oder offenkettigen C₂- bis C₃₀-Diols, wie z.B. Ethylenglykol, Propylenglykol, Butylenglykol, Hexandiol, Octandiol, ein Polypropylenglykol, Dimethylolcyclohexan, Neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Weitere Beispiele für einsetzbare Epoxidharze sind Epoxidharze, die aus der Oxidation von Olefinen hergestellt wurden, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere Beispiele für einsetzbare Epoxidharze sind ein Bisphenol-A-, -F- oder - A/F-Festharz, die aufgebaut sind, wie die vorstehend genannten Epoxid-Flüssigharze der Formel (1), außer dass der Index s einen Wert von 2 bis 12 aufweist. Weitere Beispiele sind alle vorstehend genannten Epoxidharze, die durch die Umsetzung mit mindestens einem Polyoxyalkylenpolyol hydrophil modifiziert sind.

Bevorzugt als Epoxidharz sind Bisphenol-A-, -F- oder -A/F-Fest- oder Flüssigharze, wie sie z.B. kommerziell von Dow, Huntsman und Momentive erhältlich sind. Besonders bevorzugt werden als Epoxidharze Diepoxide aus einem Bisphenol-A-, Bisphenol-F- und Bisphenol-A/F-Diglycidylether eingesetzt, insbesondere solche mit einem Epoxid-Equivalentgewicht von 156 bis 250 g/Eq, z.B. die Handelsprodukte Araldite^{®} GY 250, Araldite^{®} PY 304, Araldite^{®} GY 282 (von Huntsman); D.E.R. ^{®} 331, D.E.R. ^{®} 330 (von Dow); Epikote^{®} 828, Epikote^{®} 862 (von Momentive), und N,N-Diglycidylanilin und einem Polyglykol-Diglycidylether, bevorzugt mit einem Epoxy-Equivalentgewicht von 170 bis 340 g/Eq., z.B. die Handelsprodukte D.E.R.^{®} 732 und D.E.R.^{®} 736 (von Dow).

Die Binderkomponente (A) kann gegebenenfalls einen sogenannten Reaktivverdünner enthalten. Dies wird, wie gesagt, für den organischen Bindemittelanteil dem Epoxidharz zugerechnet. Es können ein oder mehrere Reaktivverdünner eingesetzt werden. Als Reaktivverdünner geeignet sind Mono- und Polyepoxide. Die Zugabe eines Reaktivverdünners zum Epoxidharz bewirkt eine Reduktion der Viskosität, sowie im ausgehärteten Zustand der Epoxidharz-Zusammensetzung eine Reduktion der Glasübergangstemperatur und der mechanischen Werte.

Beispiele für Reaktivverdünner sind Glycidylether von ein- oder mehrwertigen Phenolen und aliphatischen oder cycloaliphatischen Alkoholen, wie insbesondere die bereits als aliphatische oder cycloaliphatische Epoxidharze genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether, C₁₂- bis C₁₄-Alkylglycidylether oder C₁₃- bis C₁₅-Alkylglycidylether, kommerziell erhältlich als Erisys^{®} GE-7, Erisys^{®} GE-8 (von CVC) oder als Epilox^{®} P 13 - 19 (von Leuna).

Die Binderkomponente (A) kann nicht-wässrig sein. In einer bevorzugten Ausführungsform handelt es sich bei der Binderkomponente (A) um eine wässrige Binderkomponente (A), d.h. sie enthält Wasser. Die Binderkomponente (A) enthält bevorzugt eine wässrige Epoxidharz-Dispersion, wobei es sich um eine Epoxidharz-Emulsion, ein sogenanntes "emulgierbares Epoxidharz", oder eine Epoxidharz-Suspension handeln kann.

Eine Epoxidharz-Dispersion enthält bevorzugt neben Wasser mindestens ein Epoxidharz, wie es vorgängig genannt wurde, und weiterhin mindestens einen Emulgator, insbesondere einen nichtionischen Emulgator, beispielsweise einen Alkyl- oder Alkylarylpolyglykolether, wie ein polyalkoxyliertes Alkylphenol wie Alkylphenoxypoly-(ethylenoxy)ethanol, beispielsweise ein Polyaddukt aus Nonylphenol und Ethylenoxid, enthaltend pro Mol Nonylphenol bis zu 30 Mol Ethylenoxid, oder bevorzugt einen alkoxylierten Fettalkohol, z.B. einen ethoxylierten Fettalkohol. Epoxidharz-Dispersionen können z.B. einen Festkörpergehalt im Bereich von 40 - 65 Gew.% aufweisen.

Handelsübliche Epoxidharz-Dispersionen sind beispielsweise Sika^{®} Repair / Sikafloor^{®} EpoCem^{®} Modul A (von Sika Schweiz AG), Araldite^{®} PZ 323, Araldite^{®} PZ 756/67, Araldite^{®} PZ 3961 (von Huntsman), XZ 92598.00, XZ 92546.00, XZ 92533.00 (von Dow), Waterpoxy^{®} 1422, Waterpoxy^{®} 1455 (von Cognis), Beckopox^{®} EP 384w, Beckopox^{®} EP 385w, Beckopox^{®} EP 386w, Beckopox^{®} EP 2340w, Beckopox^{®} VEP 2381w (von Cytec).

Ein emulgierbares Epoxidharz enthält bevorzugt mindestens einen Emulgator, wie er bereits oben als Bestandteil einer Epoxidharz-Dispersion erwähnt wurde. Handelsübliche emulgierbare Epoxidharze sind beispielsweise Araldite^{®} PY 340 und Araldite^{®} PY 340-2 (von Huntsman), Beckopox^{®} 122w und Beckopox^{®} EP 147w (von Cytec).

Die Binderkomponente (A) kann gegebenenfalls ein oder mehrere weitere Additive enthalten. Geeignete Additive werden weiter unten erläutert.

Die Härterkomponente (B) umfasst mindestens eine Aminverbindung als Aminhärter und Wasser. Die wässrige Härterkomponente (B) ist vorzugsweise eine flüssige Komponente. Sie kann viskos sein, ist aber im Allgemeinen gießfähig.

Bei der Aminverbindung kann es sich um jede Aminverbindung handeln, die üblicherweise in der Technik als Härter für Epoxidharze eingesetzt werden. Solche Aminhärter sind im Handel erhältlich. Es können eine Aminverbindung oder zwei oder mehr Aminverbindungen eingesetzt werden. Prinzipiell geeignet als Aminverbindungen sind Monoamine, sofern es sich um ein primäres Amin handelt, Verbindungen mit mindestens zwei Aminogruppen sind aber bevorzugter. Bei den Aminogruppen kann es sich um primäre und/oder sekundäre Aminogruppen handeln. Es können gegebenenfalls auch blockierte Aminverbindungen eingesetzt werden.

Beispiele für geeignete Aminverbindungen als Aminhärter sind ein Polyamin, ein Polyaminoamid, ein Polyamin-Polyepoxid-Addukt oder ein Polyaminoamid-Polyepoxid-Addukt und Mischungen davon, die jeweils insbesondere mindestens zwei Aminogruppen enthalten, wobei die Aminogruppen gegebenenfalls in blockierter Form vorliegen können, was in der Regel aber nicht bevorzugt ist.

Es kann sich z.B. um aliphatische Polyamine, wie Diethylentriamin, Triethylentetramin, Dipropylentriamin, Tetraethylenpentamin, 3-Aminomethyl-3,5,5-trimethylcyclohexylamin, m-Xylylendiamin oder Polyoxypropylendiamin, cycloaliphatische bzw. heterocyclische Polyamine, wie 4,4'-Diamino-3,3'-di-methyldicyclohexylamin, Cyclohexylaminopropylamin oder N-Aminoethylpiperazin, Polyaminoamide, die z.B. aus einer Dimerfettsäure und einem Polyamin, wie z.B. Ethylendiamin, erhältlich sind, oder Polyaminoimidazoline handeln. Beispiele für blockierte Aminverbindungen sind z.B. Polyketimine, die durch Umsetzung von Polyaminen mit Ketonen erhalten werden, oder cyanethylierte Polyamine aus der Umsetzung von Polyaminen mit Acrylnitril, wie Dicyandiamid in unmodifizierter oder modifizierter Form.

Häufig werden auch Polyamin-Polyepoxid-Addukte oder Polyaminoamid-Polyepoxid-Addukte als Aminhärter eingesetzt. Diese werden aus der Umsetzung von Polyaminen oder Polyaminoamiden, z.B. die vorstehend genannten, mit Polyepoxiden erhalten, wobei das Polyamin bzw. Polyaminoamid im Überschuss eingesetzt wird.

Bevorzugt werden wässrige Aminhärter verwendet, die für selbstverlaufende Beschichtungssysteme eingesetzt werden. Beispiele für geeignete Handelsprodukte sind Epilink^{®}701 von AirProducts, Incorez^{®}148/700 von Incorez und D.E.H.^{®} 804 von Dow Chemical Co.

Die Härterkomponente (B) kann gegebenenfalls ein oder mehrere weitere Additive enthalten. Geeignete Additive werden weiter unten erläutert.

Die feste Komponente (C) umfasst ein hydraulisches anorganisches bzw. anderes mineralisches Bindemittel, wobei es sich bevorzugt um einen Zement handelt. Es können auch zwei oder mehr hydraulische anorganische Bindemittel eingesetzt werden. Die Komponente (C) ist eine feste Komponente und vorzugsweise pulverförmig.

Hydraulische anorganische Bindemittel sind anorganische bzw. mineralische Bindemittel, die mit Wasser auch unter Wasser erhärtbar sind. Hydraulische anorganische Bindemittel schließen hier auch sogenannte latenthydraulische Bindemittel, die unter dem Einwirken von Zusätzen mit Wasser abbinden, wie z.B. Hochofenschlacke, mit ein.

Beispiele für geeignete hydraulische anorganische Bindemittel sind hydraulischer Kalk, Zement, Flugasche, Reisschalenasche, calcinierte Recyclingprodukte der Papierindustrie, Hüttensand und Hochofenschlacke und Mischungen davon, wobei Zement besonders bevorzugt ist. Es können alle üblichen Zementsorten eingesetzt werden, insbesondere ein Zement gemäß Euronorm EN 197. Natürlich können auch Zementsorten gemäß einer anderen Zementnorm eingesetzt werden. Es kann ein Zement oder eine Mischung verschiedener Zementsorten eingesetzt werden.

Bevorzugt als Zement sind Portlandzemente, Sulfoaluminatzemente und Tonerdeschmelzzemente, insbesondere Portlandzement. Mischungen von Zementen können zu besonders guten Eigenschaften führen. Beispiele sind Mischungen von mindestens einem Portlandzement mit entweder mindestens einem Sulfoaluminatzement oder mit mindestens einem Tonerdeschmelzzement. Besonders vorteilhaft ist der Einsatz von Weißzement.

Die feste Komponente (C) kann ferner ein oder mehrere zusätzliche Additive enthalten. Beispiele sind Calciumsulfat in Form von Anhydrit, Halbhydrat- oder Dihydratgips; und/oder Calciumhydroxid, verschiedene Sand-Typen oder Quarzmehle, Silicastaub, Puzzolane und in der Zementindustrie übliche Hilfs-und Zusatzmittel wie zum Beispiel Verflüssiger, Abbindebeschleuniger, Wasserreduzierer oder Entlüfter/Entschäumer.

In einer besonders bevorzugten Ausführungsform der Erfindung enthält die mehrkomponentige Zusammensetzung ein oder mehrere Pigmente als Farbmittel. Auf diese Weise wird eine gefärbte Zusammensetzung erhalten, aus denen gefärbte Beschichtungen erhalten werden können, was besonders bevorzugt ist. Auf diese Weise können gefärbte Zusammensetzungen bzw. gefärbte Beschichtungen erhalten werden, die sich von den sonst üblichen grauen Zusammensetzungen bzw. Beschichtungen unterscheiden. Mischungen von zwei oder mehr Pigmenten sind vorteilhaft, um einen gewünschten Farbton zu erzeugen.

Die mehrkomponentige Zusammensetzung ist besonders gut mit Pigmenten in den üblichen Handelsformen kompatibel, so dass eine große Farbtonvielfalt möglich ist. Das oder die Pigmente können in mindestens einer der Komponenten A), B) oder C) und/oder in mindestens einer zusätzlichen Pigmentkomponente D) enthalten sein.

Bei den Pigmenten kann es sich um anorganische oder organische Pigmente handeln. Beispiele für anorganische Pigmente sind Titandioxid, Ruß, Bismutpigmente, Eisenoxidpigmente, Chromoxide, Mischphasenoxid-Pigmente, Eisencyanblau, Ultramarin, Kobaltpigmente und Chromatpigmente. Beispiele für organische Pigmente sind Azopigmente und polycyclische Pigmente wie Kupferphthalocyanin-, Chinacridone-, Diketopyrrolopyrrol-, Perylen-, Isoindolin-, Dioxazin- und Indanthron-Pigmente.

Das Pigment oder Mischungen von Pigmenten können als solche in fester Form, z.B. als Pulver oder Kollerpigment, oder als übliche Pigmentpräparation, z.B. in Form einer Pigmentpaste, eingesetzt werden. Als Pigmente eignen sich alle im Handel erhältlichen Pigmente oder Pigmentpräparationen. In die flüssigen Komponenten (A) und (B) können die Pigmente z.B. direkt verrieben oder als Pigmentpräparation, z.B. als Pigmentpaste, eingebracht werden. In die feste Komponente (C) können das oder die Pigmente in fester Form, z.B. als Kollerpigment, eingemischt werden. Es ist ebenfalls möglich, das oder die Pigmente als Pulver oder Kollerpigment oder Pigmentpräparation, z.B. in Form einer Pigmentpaste, als zusätzliche Pigmentkomponente (D) gesondert aufzubewahren und erst bei Gebrauch mit den anderen Komponenten zu vermischen.

Die erfindungsgemäße mehrkomponentige Zusammensetzung ist dahingehend vorteilhaft, dass handelsübliche Pigmente bzw. Pigmentpräparationen leicht homogen in die Zusammensetzung eingemischt werden können, so dass auch von grau verschiedene Farbtöne für die Zusammensetzungen bzw. Beschichtungen in großer Vielfalt möglich sind.

In einer bevorzugten Ausführungsform enthält die mehrkomponentige Zusammensetzung Sand, wobei der Sand in der festen Komponente (C) und/oder in einer zusätzlichen Komponente enthalten sein kann.

Die mehrkomponentige Zusammensetzung kann neben den drei genannten Komponenten nach Bedarf weitere zusätzliche Komponenten umfassen. Beispiele für solche optionalen zusätzlichen Komponenten sind die vorstehend erwähnte Pigmentkomponente (D). Ferner kann z.B. ein Teil des Wassers als eigene Komponente vorliegen, die erst bei Mischung der Komponenten vor Gebrauch zugegeben wird, um die gewünschte Wassermenge einzustellen. Sand kann gegebenenfalls auch in Form einer zusätzlichen eigenen Komponente eingesetzt werden.

Weitere optionale Additive, die insbesondere in der Binderkomponente (A) und/ oder in der Härterkomponente (B), gegebenenfalls aber auch in einer oder mehreren anderen Komponenten enthalten sein können, sind auf diesem Gebiet üblicherweise eingesetzte Additive, wie z.B. nicht-reaktive Verdünner, Lösemittel oder Filmbildehilfsmittel; Reaktivverdünner und Extender, z.B. Epoxidgruppen-haltige Reaktivverdünner, wie sie bereits erwähnt wurden; Polymere, thermoplastische Polymere; anorganische und organische Füllstoffe, wie z.B. gemahlene oder gefällte Calciumcarbonate, Baryt, Talke, Quarzmehle, Quarzsand, Dolomite, Wollastonite, Kaoline, Glimmer, Aluminiumoxide, Aluminiumhydroxide, Kieselsäuren, PVC-Pulver oder Hohlkugeln; Fasern; Beschleuniger, welche die Reaktion zwischen Aminogruppen und Epoxidgruppen beschleunigen, z.B. Säuren oder zu Säuren hydrolysierbare Verbindungen; tertiäre Amine und Salze davon; quaternäre Ammoniumsalze; Rheologiemodifizierer, wie z.B. Verdickungsmittel; Haftvermittler, wie z.B. Organoalkoxysilane; Stabilisatoren gegen Wärme, Licht oder UV-Strahlung; flammhemmende Substanzen; oberflächenaktive Substanzen, wie z.B. Netzmittel, Verlaufsmittel, Entlüftungsmittel oder Entschäumer; und Biozide.

Bei der erfindungsgemäßen mehrkomponentigen Zusammensetzung handelt es sich um ein Hybridsystem, das ein organisches Bindemittel aus dem mindestens einen Epoxidharz und gegebenenfalls Reaktivverdünner der Binderkomponente (A) und dem Aminhärter der Härterkomponente (B) und ein anorganisches Bindemittel aus dem hydraulischen anorganischen Bindemittel, vorzugsweise Zement, in der festen Komponente (C) umfasst.

Das organische Bindemittel ist dabei die Gesamtmenge an Epoxidharz und Aminhärter, wobei, sofern auch Reaktivverdünner eingesetzt wird, dieser bezüglich der Gesamtmenge dem Epoxidharz zugerechnet wird. Die mehrkomponentige Zusammensetzung enthält, bezogen auf das Gesamtgewicht, mindestens 8 Gew.-%, bevorzugt mindestens 10 Gew.-% und bevorzugter mindestens 11 Gew.-% organisches Bindemittel. Im Allgemeinen sind in der mehrkomponentigen Zusammensetzung, bezogen auf das Gesamtgewicht, nicht mehr als 40 Gew.-% und bevorzugt nicht mehr als 30 Gew.-% organisches Bindemittel enthalten.

Die mehrkomponentige Zusammensetzung enthält ferner bevorzugt 0,5 Gew.- % bis 20 Gew.-%, bevorzugt 1,5 Gew.-% bis 10 Gew.-% an Pigment als Farbmittel, bezogen auf das Gesamtgewicht.

Die mehrkomponentige Zusammensetzung enthält ferner bevorzugt 8 Gew.-% bis 50 Gew.-%, bevorzugt 15 Gew.-% bis 40 Gew.-%, hydraulisches anorganisches Bindemittel, vorzugsweise Zement oder Zement in Kombination mit einem anderen hydraulischen anorganischen Bindemittel.

Das Mischungsverhältnis zwischen der Binderkomponente (A) und der Härterkomponente (B) kann in breiten Bereichen variieren. Es wird bevorzugt so gewählt, dass in der mehrkomponentigen Zusammensetzung das stöchiometrische Verhältnis von Epoxidfunktionalität zu Aminfunktionalität im Bereich von 0,75 bis 1,25 (bzw. 75 bis 125%) liegt.

Die Menge an Wasser in der mehrkomponentigen Zusammensetzung kann ebenfalls in breiten Bereichen variieren, wobei die Menge an Wasser in der mehrkomponentigen Zusammensetzung vorzugsweise so gewählt wird, dass das Gewichtsverhältnis von Wasser zu hydraulischem anorganischem Bindemittel, bevorzugt Zement, im Bereich von 0,3 bis 0,8 liegt. Wasser ist in der

Härterkomponente (B) enthalten. Wasser kann auch in der Binderkomponente (A) enthalten sein, was auch bevorzugt ist. Ferner kann ein Teil des Wassers auch als eigene Komponente gesondert zugegeben werden.

Die Erfindung betrifft auch ein Verfahren zur Herstellung einer Beschichtung, vorzugsweise einer Bodenbeschichtung, mit der erfindungsgemäßen mehrkomponentigen Zusammensetzung, wobei das Verfahren folgende Verfahrensschritte umfasst: a) Mischen der Binderkomponente (A) und der wässrigen Härterkomponente (B), b) Zugabe der festen Komponente (C) zu der in Schritt a) erhaltenen Mischung unter Rühren, um eine Beschichtungszusammensetzung zu erhalten, c) Aufbringen der erhaltenen Beschichtungszusammensetzung auf ein Substrat, d) gegebenenfalls Glätten oder Entlüften der aufgebrachten Beschichtungszusammensetzung und e) Aushärten der aufgebrachten Beschichtungszusammensetzung, um die Beschichtung zu erhalten.

Das Aufbringen der Beschichtungszusammensetzung und die Aushärtung erfolgen vorteilhaft z.B. bei Temperaturen im Bereich von 5 bis 40°C.

Wie erläutert, kann die mehrkomponentige Zusammensetzung auch ein oder mehrere zusätzliche Komponenten umfassen. Die Art und Reihenfolge der Zugabe der zusätzlichen Komponenten zur Mischung der Zusammensetzung ist beliebig, vorzugsweise werden aber eine oder mehrere zusätzliche flüssige Komponenten, sofern eingesetzt, in Schritt a) zugemischt. Eine oder mehrere zusätzliche feste Komponenten, sofern eingesetzt, werden bevorzugt in Schritt b) zugemischt.

Das Substrat kann vor dem Aufbringen der Beschichtungszusammensetzung mit einer Grundierung versehen werden. Ferner ist es möglich, auf die aufgebrachte Beschichtungszusammensetzung eine Deckschicht als Versiegelungsschicht aufzubringen.

Bei dem Substrat kann es sich um jedes beliebiges Material handeln. Vorzugsweise handelt es sich um einen Bodenbelag, z.B. aus Beton, Mörtel oder Estrich, der gegebenenfalls eine Beschichtung, wie eine Kratzspachtelung oder eine Grundierung und/oder eine andere übliche Beschichtung, aufweisen kann.

Mit dem Mischen der mehrkomponentigen Zusammensetzung beginnt die Aushärtungsreaktion. Die Epoxygruppen des Epoxidharzes und gegebenenfalls des Reaktivverdünners reagieren mit den reaktiven NH-Wasserstoffen unter Bildung der organischen Bindemittelmatrix, während das hydraulische anorganische Bindemittel mit dem Wasser unter Hydratationsreaktionen die anorganische Bindemittelmatrix bildet, wodurch die Zusammensetzung schließlich aushärtet. Somit beschreibt die vorliegende Erfindung auch eine ausgehärtete Zusammensetzung bzw. Beschichtung.

Die mehrkomponentige Zusammensetzung kann als Mörtel verwendet werden. Besonders geeignet ist sie zur Herstellung von Beschichtungen oder Versiegelungen, insbesondere als Bodenbeschichtung oder Bodenversiegelung.

Es folgen Beispiele zur Erläuterung der Erfindung, das aber in keiner Weise den Umfang der Erfindung beschränken soll.

### Beispiele

Folgende Handelsprodukte werden verwendet:
- D.E.H.^{®} 804: wässriger Aminhärter, Polyamin-Polyepoxid-Addukt, Feststoffgehalt 70 Gew.%, Dow Chemical Company
- Byk-019^{®}: siliconhaltiger Entschäumer, Byk
- EFKA^{®}-2550: Entschäumer, modifiziertes Polydimethylsiloxan, BASF
- Hostatint^{®}Weiss R 30: bindemittelfreie wässrige Pigmentpräparation, Pigmentgehalt 70 Gew.-%, Clariant
- Colanyl^{®}Blau B2G 131: bindemittelfreie wässrige Pigmentpräparation, Pigmentgehalt 47 Gew.-%, Clariant
- Hostatint^{®}Rosa E 30: bindemittelfreie wässrige Pigmentpräparation, Pigmentgehalt 42 Gew.-%, Clariant
- Colanyl^{®}Schwarz N 131: bindemittelfreie wässrige Pigmentpräparation, Pigmentgehalt 40 Gew.-%, ClariantSika^{®} Repair / Sikafloor^{®} wässrige Epoxidharz-Dispersion,
- EpoCem^{®} Modul A: Festkörpergehalt ca. 64%, EEW 295 Sika Schweiz AG
- Sikafloor^{®}-81: pulverförmige zementhaltige Komponente,
- EpoCem^{®} (C): Zementgehalt ca. 37%, Sika Schweiz AG
- Weißzement: Zement CEM I 52,5R, Valderrivas

Es wurden dreikomponentige Zusammensetzungen gemäß nachstehender Tabelle 1 formuliert. In Tabelle 2 sind Eigenschaften der Beispiele 1 und 2 aufgeführt.

**Tabelle 1 Zusammensetzung**

| Rohstoff | Beispiel 1 (Gew.-Teile) | | Beispiel 2 (Gew.-Teile) | |
|---|---|---|---|---|
| Komponente A | | | | |
| Sika® Repair / Sikafloor® EpoCem® Modul A | | 24,600 | | 14,000 |
| | | | | |

| Komponente B | | 26,125 | | 16,000 |
|---|---|---|---|---|
| D.E.H.® 804 | 14,900 | | 8,500 | |
| BYK-019® | 0,150 | | 0,080 | |
| EFKA®-2550 | 0,075 | | 0,040 | |
| Wasser | 9,500 | | 5,400 | |
| Hostatint® weiss R 30 | 1,250 | | 1,733 | |
| Hostatint® rosa E 30 | 0,157 | | 0,156 | |
| Colanyl® blau B 2 G 131 | 0,067 | | 0,066 | |
| Colanyl® schwarz N 131 | 0,026 | | 0,026 | |
| | | | | |

| Komponente C | | | | |
|---|---|---|---|---|
| Weißzement | | 49,275 | | |
| Sikafloor®-81 EpoCem® (C) | | | | 70,000 |

**Tabelle 2 Eigenschaften**

| | Beispiel 1 | Beispiel 2 |
|---|---|---|
| orqan. Bindemittelgehalt [Gew.-%] | 25,8 | 14,7 |
| Pigmentgehalt [Gew.-%] | 1,1 | 1,5 |
| Zementgehalt (Z) [Gew.-%] | 49,3 | 25,9 |
| Wassergehalt (W) [Gew.-%] | 23,0 | 13,2 |
| W/Z Verhältnis | 0,5 | 0,5 |
| stöchiometrisches Verhältnis [in %] | 97,7 | 97,4 |
| Dichte der noch flüssigen Mischung [g/ml] | 1,6 | 1,9 |

### Herstellung der Komponente B:

Die wässrige Aminverbindung wird in einem geeigneten Gefäß vorgelegt und die weiteren Rohstoffe unter Rühren mit einem Dissolver in der angegebenen Reihenfolge zugegeben.

### Herstellung der Beschichtungszusammensetzung:

Die Komponenten A und B werden im angegebenen Mischungsverhältnis mit einem Flügelrührer gemischt und nach guter Durchmischung (ca. 1-2 Minuten) wird die Komponente C kontinuierlich zugegeben und für weitere ca. 3 Minuten gemischt.

### Beschichtungsbeispiel 1:

Die Formulierung gemäß Beispiel 1 wird auf eine mit einem EP-Harz grundierte Faserzementplatte gegossen und mit einer Rolle verteilt. Der Materialverbrauch beträgt ca. 400g/m². Die Formulierung lässt sich mit dieser Verarbeitungsmethode gut verteilen und weist nach Erhärten eine seidenmatte strukturierte Oberfläche auf.

### Beschichtungsbeispiel 2:

Die Formulierung gemäß Beispiel 2 wird auf eine mit einem EP-Harz grundierte Faserzementplatte gegossen und mit einer Zahnrakel gleichmäßig verteilt. Anschließend wird die Formulierung noch durch Stacheln entlüftet. Der Materialverbrauch bei diesem Beispiel beträgt ca. 4kg/m², so dass eine ca. 2mm dicke Beschichtung erhalten wird. Die Verarbeitung entspricht dabei einem klassischen lösungsmittelfreien EP-System. Die nach Erhärten erhaltene Oberfläche weist eine seidenmatte Optik auf, die durch den enthaltenen Sand eine Oberflächentextur aufweist.

## Patentansprüche

1. Mehrkomponentige Zusammensetzung, umfassend
A) eine Binderkomponente (A) umfassend mindestens ein Epoxidharz,
B) eine wässrige Härterkomponente (B) umfassend mindestens eine Aminverbindung als Aminhärter und Wasser und
C) eine feste Komponente (C) umfassend mindestens ein hydraulisches anorganisches Bindemittel, vorzugsweise Zement,
**dadurch gekennzeichnet, dass** die mehrkomponentige Zusammensetzung, bezogen auf das Gesamtgewicht, mindestens 8 Gew.-% organisches Bindemittel enthält, wobei die Gesamtmenge an Epoxidharz und Aminhärter das organische Bindemittel darstellt.

2. Mehrkomponentige Zusammensetzung nach Anspruch 1, **dadurch gekennzeichnet, dass** die mehrkomponentige Zusammensetzung ferner mindestens ein Pigment als Farbmittel in mindestens einer der Komponenten A), B) oder C) und/oder in mindestens einer zusätzlichen Pigmentkomponente D) umfasst.

3. Mehrkomponentige Zusammensetzung nach Anspruch 2, **dadurch gekennzeichnet, dass** die mehrkomponentige Zusammensetzung, bezogen auf das Gesamtgewicht, 0,5 Gew.-% bis 20 Gew.-% an dem mindestens einen Pigment als Farbmittel enthält.

4. Mehrkomponentige Zusammensetzung nach irgendeinem der Ansprüche 1 bis 3, **dadurch gekennzeichnet, dass** die mehrkomponentige Zusammensetzung, bezogen auf das Gesamtgewicht, 8 Gew.-% bis 50 Gew.-% an hydraulischem anorganischem Bindemittel enthält.

5. Mehrkomponentige Zusammensetzung nach irgendeinem der Ansprüche 1 bis 4, **dadurch gekennzeichnet, dass** die mehrkomponentige Zusammensetzung, bezogen auf das Gesamtgewicht, nicht mehr als 40 Gew.-% organisches Bindemittel enthält.

6. Mehrkomponentige Zusammensetzung nach irgendeinem der Ansprüche 1 bis 5, **dadurch gekennzeichnet, dass** in der mehrkomponentigen Zusammensetzung das Gewichtsverhältnis von Wasser zu hydraulischem anorganischem Bindemittel, bevorzugt Zement, im Bereich von 0,3 bis 0,8 liegt, wobei ein Teil des Wassers auch als eigene Komponente zugegeben werden kann.

7. Mehrkomponentige Zusammensetzung nach irgendeinem der Ansprüche 1 bis 6, **dadurch gekennzeichnet, dass** die mindestens eine Aminverbindung ein Polyamin, ein Polyaminoamid, ein Polyamin-Polyepoxid-Addukt, ein Polyaminoamid-Polyepoxid-Addukt oder eine Mischung von mindestens zwei dieser Verbindungen ist.

8. Mehrkomponentige Zusammensetzung nach irgendeinem der Ansprüche 1 bis 7, **dadurch gekennzeichnet, dass** die Zusammensetzung ferner Sand umfasst, wobei der Sand in der festen Komponente (C) und/oder in einer zusätzlichen Komponente enthalten ist.

9. Mehrkomponentige Zusammensetzung nach irgendeinem der Ansprüche 1 bis 8, **dadurch gekennzeichnet, dass** die Binderkomponente (A) eine wässrige Binderkomponente ist, wobei vorzugsweise das mindestens eine Epoxidharz in Wasser dispergiert vorliegt.

10. Mehrkomponentige Zusammensetzung nach irgendeinem der Ansprüche 1 bis 9, **dadurch gekennzeichnet, dass** das mindestens eine Epoxidharz mindestens ein Epoxidharz und einen Reaktivverdünner umfasst.

11. Verfahren zur Herstellung einer Beschichtung oder Versiegelung, vorzugsweise einer Bodenbeschichtung, mit einer mehrkomponentigen Zusammensetzung nach irgendeinem der Ansprüche 1 bis 10, wobei das Verfahren folgende Verfahrensschritte umfasst
a) Mischen der Binderkomponente (A) und der wässrigen Härterkomponente (B),
b) Zugabe der festen Komponente (C) zu der in Schritt a) erhaltenen Mischung unter Rühren, um eine Beschichtungszusammensetzung zu erhalten,
c) Aufbringen der erhaltenen Beschichtungszusammensetzung auf ein Substrat,
d) gegebenenfalls Glätten oder Entlüften der aufgebrachten Beschichtungszusammensetzung und
e) Aushärten der aufgebrachten Beschichtungszusammensetzung, um die Beschichtung oder Versiegelung zu erhalten.

12. Verfahren nach Anspruch 11, **dadurch gekennzeichnet, dass** in Schritt a) eine oder mehrere zusätzliche flüssige Komponenten zugemischt werden und/oder in Schritt b) eine oder mehrere zusätzliche feste Komponenten zugemischt werden.

13. Verfahren nach Anspruch 11 oder Anspruch 12, **dadurch gekennzeichnet, dass** das Substrat vor dem Aufbringen der Beschichtungszusammensetzung mit einer Grundierung versehen wird und/oder die aufgebrachte Beschichtungszusammensetzung mit einer zusätzlichen Deckschicht versiegelt wird.

14. Beschichtung oder Versiegelung, insbesondere Bodenbeschichtung oder Bodenversiegelung, erhältlich nach einem Verfahren nach irgendeinem der Ansprüche 11 bis 13.

15. Verwendung einer mehrkomponentigen Zusammensetzung nach irgendeinem der Ansprüche 1 bis 10 als Mörtel, Versiegelung oder Beschichtung, insbesondere als Bodenbeschichtung oder Bodenversiegelung.
